# EUROPEAN PATENT SPECIFICATION

(11) **EP 2 597 594 B1**
(45) Date of publication and mention of the grant of the patent: **21.09.2016**
(21) Application number: 11306546.0
(22) Date of filing: 24.11.2011
(51) Int. Cl.: G06K 7/00, G06K 7/10

(54) **Pre-cabled module embedding patch antennas for furniture**
Vorverkabeltes Modul mit eingebetteten Patch-Antennen für Möbel
Antennes patch intégrant un module précâblé pour meubles

(43) Date of publication of application: 29.05.2013
(73) Proprietor: HMY Group, 89470 Moneteau (FR)
(72) Inventor: Lognon, Laurent, 89000 Saint Georges sur Baulche (FR)
(74) Representative: Santarelli

(56) References cited:
- WO-A1-2009/157791
- US-A- 5 821 902
- US-A1- 2005 206 568
- US-A1- 2009 167 502
- US-B1- 7 806 333

## Description

The present invention relates generally to RFID systems and more specifically to a pre-cabled module for furniture, in particular for retail furniture, which comprises patch antennas and means for selecting and accessing an antenna. According to the invention, several pre-cabled modules can be combined each together to increase, in particular, the number of antennas that can be used. The structure of the patch antennas embedded within the pre-cabled modules comprises fastening means for electrically connecting a radiation electrode to a microstrip line and for securing electrodes and microstrip lines.

Thanks to the low cost of passive RFID tags (Radio Frequency Identification tags), RFID systems are used in many different applications including, in particular, retail applications for managing inventory. In such applications, an RFID reader comprising an antenna interrogates RFID tags located in the vicinity of the reader's antenna.

The kind of information returned by an RFID tag depends on its type. However, regarding retail applications, the data read in an RFID tag generally relates to the identification of the item associated with the RFID tag. Such identification may comprise an identifier of the item, a description of the item, an identifier of the manufacturer of the item, and the like. One of the main advantages of the use of RFID technology over other technologies like barcode technology lies in its capacity to interrogate several tags simultaneously that may not be in direct line of sight of the reader.

However, although the use of RFID tags may present numerous advantages over traditional technologies, there remain some drawbacks. In particular, RFID readers are generally expensive and the communication range allowing communication between a reader and a low cost RFID tag is limited.

To cope with such problems, several antennas are generally connected to a single RFID reader via a multiplexer which is used to select the antenna to be used. The antennas used for retail applications are typically patch antennas that is to say planar resonant antennas for narrow-band microwave wireless links that require semi-hemispherical coverage. They are often used as elements for an array. It is noted that most of retail applications are based upon UHF (*Ultra High Frequency*) RFID tags whose signal frequency is comprised between 860 and 960 MHz.

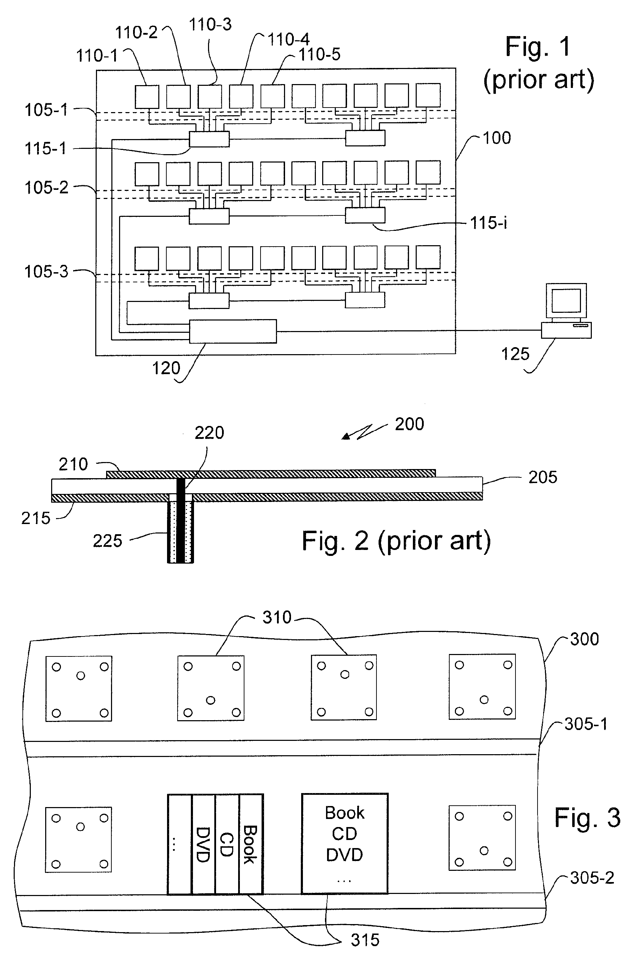

Figure 1 illustrates schematically a back view of a back panel 100 of a shelving structure comprising horizontal shelves 105-1 to 105-3 for CDs, DVDs, books, or the like. As shown, back panel 100 includes an RFID infrastructure. More precisely, back panel 100 comprises several arrays of antennas, each array of antennas being associated with one multiplexer allowing the selection of an antenna in the array. For example, each of the antennas 110-1 to 110-5 is connected to the multiplexer 115-1. Similarly, antennas are connected to the multiplexer 115-I, as shown.

The multiplexers to which antennas are connected, for example multiplexers 115-1 and 115-i, are themselves connected to another multiplexer 120. In turn, multiplexer 120 is connected to a computer 125, for example a personal computer. Accordingly, the computer 125 can select and activate one antenna amongst all the antennas of the back panel 100 by controlling paths established by the multiplexers. The activation of an antenna allows electronic tags located in its vicinity to be read. For the sake of illustration, the activation of antenna 110-3 allows access to the information stored in the electronic tags attached to the items located in front of the antenna 110-3 (in front of the back panel 100) on the horizontal shelf 105-1.

As mentioned above, in view of the advantages they provide over other antennas, for example in terms of weight, cost, and ease of integration, patch antennas are often used for retail applications. As shown in Figure 2, representing schematically a cross sectional view of a patch antenna, a patch antenna (200) comprises a dielectric substrate (205) arranged in between an antenna radiation electrode (210, radiation element) and a ground electrode (215, ground conductor). A feeding pin or probe feed (220) connected to the antenna radiation electrode is used to feed the radio frequency (RF) signal to be emitted and/or to receive an RF signal. The received RF signal or the RF signal to be emitted is transmitted between the antenna and a reader (not represented) thanks to a feed line 225, for example a coaxial cable.

The antennas and the multiplexers are typically glued, screwed, or fixed by equivalent means on the back panel. The electrical connexions between the antennas and the multiplexers are generally established by cables, for example coaxial cable, adapted to convey RF signals received from electronic tags through the antennas. Accordingly, when retail furniture embedding an RFID infrastructure is to be installed, it is necessary to connect cables for establishing electrical links, which is time consuming and a potential source of troubles.

To reduce the time required for installing such a type of furniture, arrays of antennas with a multiplexer can be provided on a single printed circuit board (PCB). Accordingly, in such an implementation, only one electrical connexion between each printed circuit board and a shared multiplexer is required. However, such a solution is expensive.

US Patent No. 7,806,333 which forms the preamble of claim 1, discloses a system for tracking RFID tags with a reader having a plurality of loop antennas that are positioned such that portions of at least two loop antennas physically overlap each other and are in approximately the same plane.

US Patent No. 5,821,902 discloses a folded dipole microstrip antenna comprising a feeder line having microstrip circuit elements printed on an upper surface of a laminate board. The antenna further comprises a folded microstrip dipole element printed on the lower surface of the laminate board and a ground plane. The folded dipole and the ground plane are spaced by foam spacer.

US Patent Application No. 2005/0206568 discloses an antenna system including a stacked patch antenna comprising at least a first patch antenna and a second patch antenna. The stacked patch antenna comprises a differential feed patch antenna. At least a portion of the second patch antenna serves as a ground plane for the first patch antenna.

It is a broad object of the invention to remedy the shortcomings of the prior art as described here above.

It is an object of the present invention to provide a pre-cabled module for furniture according to claim 1. The pre-cabled module comprising at least one conductive plate, at least one multiplexer board, and a plurality of antennas, each antenna comprising a radiation electrode and a rigid microstrip line, a ground electrode of each of the antennas being the at least one conductive plate, each of the electrodes and the microstrip line of each antenna forming a layered conductive plate, each antenna further comprising fastening and insulating means for securing the three layered plates and for electrically connecting the radiation electrode to the rigid microstrip line, the ground electrode being insulated from the radiation electrode and the rigid microstrip line, the rigid microstrip line of each of the antennas being electrically connected to the multiplexer board.

The pre-cabled module according to the invention allows the risk of establishing bad electrical connections to be reduced when installing a piece of furniture comprising such a pre-cabled module as well as reducing the time required for this installation. Moreover, the use of several pre-cabled modules of different shapes and sizes, according to the invention, enables different kinds of furniture to be made. Because of their simple shapes, radiation electrodes and microstrip lines are easily manufactured, with limited loss of material. The pre-cabled modules of the invention are universal modules in the meaning that they are not specific, in particular from shape and functionality points of view.

According to a particular embodiment, the at least one conductive plate is located between the radiation layer and the rigid microstrip line of each of the antennas. The at least one conductive plate is made of metal sheet belonging to a piece of furniture. Therefore, the structure of the antennas embedded within the pre-cabled module of the invention enables pre-cabled modules to be manufactured with reduced thickness. Back panels used as ground electrodes remain easy to manufacture.

The radiation electrode and/or the rigid microstrip line of at least one of the antennas is/are preferably made of electrically conductive non-magnetic material such as aluminium, austenitic stainless steel, brass, or copper. Accordingly, the radiation electrodes and/or the rigid microstrip lines can be made of recyclable material, in particular of recyclable material used for manufacturing furniture.

Still according to a particular embodiment, the multiplexer board comprises a multiplexer device allowing the selection of at most one of the radiation electrodes of the antennas so as to connect at most one of the radiation electrodes of the antennas to a signal connector.

The multiplexer device is advantageously configured for allowing the selection of at most one of the radiation electrodes of the antennas or of a second signal connector, the signal connector being called first signal connector, so as to connect at most one of the radiation electrodes of the antennas or the second signal connector to the first signal connector. Accordingly, several pre-cabled modules can be cascadingly connected.

Still in a particular embodiment, the multiplexer board further comprises first and second control signal connectors, the first and second control signal connectors being connected to each other and to the multiplexer device to enable the multiplexer device to be controlled by a control signal received from the first control signal connector.

The multiplexer board preferably further comprises a control circuit that is operational for controlling the multiplexer device in response to the control signal, the control circuit comprising advantageously means for transmitting an item of information relating to the number of antennas selectable by the multiplexer device.

In a particular embodiment, the size of the pre-cabled module is substantially the same size as an equivalent standard module for furniture so that pieces of furniture can be easily assembled an/or modified according to specific RFID functionality needs.

Another object of the invention is to provide a piece of furniture comprising at least one pre-cabled module as previously described.

The piece of furniture advantageously comprises a plurality of pre-cabled modules as previously described, the piece of furniture further comprising a reader, the reader comprising means for accessing data of an electronic tag located in the vicinity of the radiation electrode of one of the antennas, the reader being connected to a single pre-cabled module amongst the plurality of pre-cabled modules. The piece of furniture preferably comprises processing means connected to the reader, the processing means comprising communication means for transmitting data of an electronic tag located in the vicinity of the radiation electrode of one of the antennas to an external apparatus.

Therefore, the piece of furniture according to the invention can access and transmit autonomously items of information obtained from RFID tags located in the vicinity of the antennas of the piece of furniture.

The piece of furniture advantageously comprises storage means for storing data of an electronic tag located in the vicinity of the radiation electrode of one of the antennas.

Further advantages of the present invention will become apparent to the ones skilled in the art upon examination of the drawings and detailed description. It is intended that any additional advantages be incorporated herein.
Figure 1 illustrates schematically a back view of a back panel of a shelving structure for CDs, DVDs, books, or the like embedding an RFID infrastructure;
Figure 2 illustrates schematically a cross sectional view of a standard patch antenna;
Figure 3 represents schematically a partial front view of a gondola showing a part of its back panel and two horizontal shelves, embedding an RFID infrastructure;
Figure 4 represents schematically a partial back view of the gondola partially shown in Figure 3;
Figure 5 represents schematically a partial top view of the gondola partially shown in Figure 3, illustrating, in particular, the arrangement of radiation electrodes and microstrip lines relative to the back panel;
Figure 6, comprising Figures 6a and 6b, illustrates an example of means for connecting a patch antenna and for fastening an associated microstrip line and a radiation electrode, according to the invention;
Figure 7 illustrates schematically an example of a MUX board for selecting an antenna in an array of antennas;
Figure 8 illustrates schematically a piece of furniture embedding pre-cabled modules according to the invention;
Figure 9 illustrates an example of a MUX board architecture for selecting an antenna in a pre-cabled module;
Figure 10 is a time diagram illustrating a control command of an arrangement of the type illustrated in Figure 9;
Figure 11 illustrates an example of a MUX board of a pre-cabled module, based on the architecture illustrated in Figure 9; and,
Figure 12 illustrates an example of an algorithm for determining the number of antennas that can be individually selected from a set of pre-cabled modules comprising MUX boards such as the one represented in Figure 11.

According to the invention, there is provided pre-cabled modules comprising patch antennas that are particularly adapted for furniture such as gondolas.

According to a particular embodiment, the invention is directed to patch antennas for interrogating RFID tags of the UHF type whose signal frequency is approximately equal to 860 MHz or to 960 MHz. The arrangement of the antennas aims at obtaining automatically a real-time inventory of the items located within furniture.

The patch antennas embedded within pre-cabled modules of the invention are designed so as to minimize the amount of cabling and the number of UHF connectors.

To reduce cost, to make easy the implementation of the RFID system, and to optimize antenna density, parts of the furniture are used as elements of the patch antennas. More precisely, parts of the furniture comprising parts of the RFID system are preconfigured as modules so as to reduce the number of connexions, in particular connexions for RF and control signals, when retail furniture is to be installed on a retail site.

It is noted that positioning patch antennas, related feedlines, and other required electronic components in furniture typically depends, in particular, on the type of furniture to be installed and the type and size of the items to be presented in the furniture. Accordingly, preconfigured modules are determined so as to be as much as possible reusable.

In a particular embodiment, pieces of furniture embedding an RFID infrastructure comprise a visible surface, for example the front face of the back panel, and a hidden surface such as the back face of the back panel. The back panel, made of a conductive material such as sheet metal, is used as the ground electrode of the patch antenna. The radiation electrode of the patch antenna is arranged in front of the back panel while the feedlines are arranged on the other side of the back panel, each radiation electrode being connected to a feedline with a probe feed arranged in a hole of the back panel. Each feedline is connected to a multiplexer which is configured to select at most one of radiation electrodes to which it is connected. Several multiplexers can be used in the same piece of furniture. In such a case, all the multiplexers connected to the radiation electrodes are advantageously connected to each other so as to transmit RF and control signals.

For the sake of illustration, the following description is directed to furniture of the gondola type. However, the invention applies to any type of furniture.

Figure 3 represents schematically a partial front view of a gondola showing a part of its back panel 300 and two horizontal shelves 305-1 and 305-2, embedding an RFID infrastructure. For the sake of clarity, the parts shown are not represented with a common scale.

As illustrated, several radiation electrodes, generically referred to as 310, are visible in front of the back panel 300. According to the given example, each radiation electrode is fastened by five rivets, screws, or the like, one being used as a probe feed. Each radiation electrode, in combination with the other parts of the corresponding patch antenna, is able to read the content of electronic tags located in its vicinity, typically in front of it (according to its radiation pattern), as illustrated with reference 315 that related to items placed on horizontal shelf 305-2, on which electronic tags are fixed.

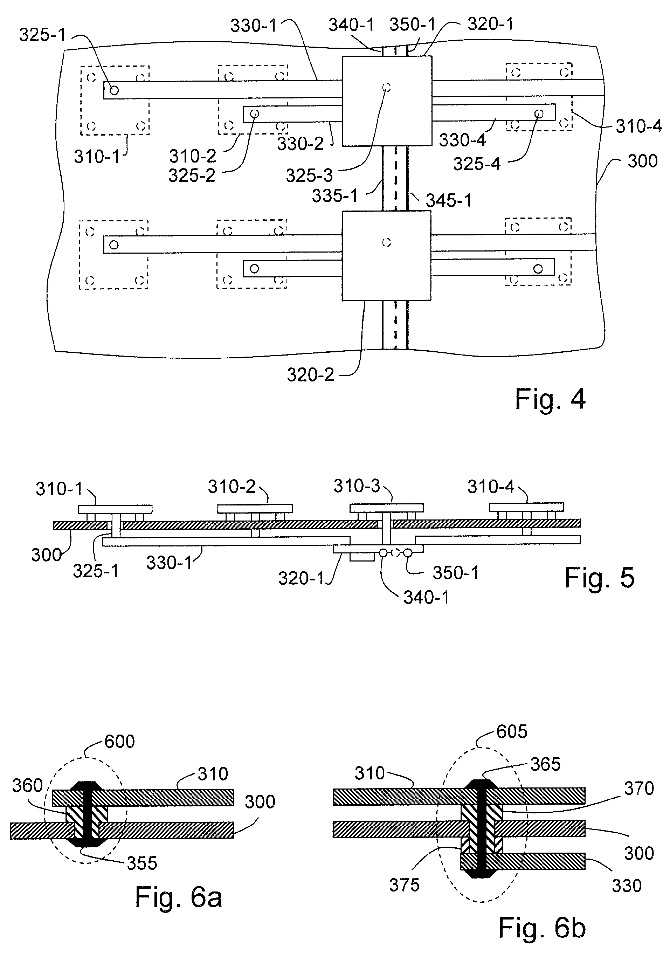

Figure 4 represents schematically a partial back view of the gondola partially shown in Figure 3. As illustrated, multiplexer systems, referred to as MUX boards, are connected to groups of antennas. For example, the MUX board 320-1 is connected to radiation electrodes 310-1 to 310-4 (one radiation electrode being masked by the MUX board 310-1), by means of probe feeds 325-1 to 325-4 (crossing back panel 300) and rigid microstrip lines 330-1 to 330-4, respectively. It is noted that the position of a probe feed relative to the corresponding radiation electrode is set as a function of the antenna characteristics. According to the illustrated example, each probe feed is horizontally centred on the radiation electrode and vertically located around one or two thirds of the radiation electrode's height (allowing two parallel rigid microstrip lines to link a MUX board to two radiation electrodes, as illustrated).

Each MUX board comprises a multiplexer allowing selection of at most one antenna so as to connect the selected radiation electrode to a radio frequency signal up-going link (*RF_up*) or to connect the radio frequency signal up-going link to a radio frequency signal down-going link (*RF_down*) for selecting an antenna connected to a MUX board that is directly or indirectly connected to the MUX board considered. For example, *RF_up* 335-1 may be connected to any one of the radiation electrodes 310-1 to 310-4 or to *RF_down* 340-1.

It is considered herein that an up-going signal, from the perspective a particular MUX board, is directed to a link established between the particular MUX board and a reader to which it is connected (directly or indirectly) while a down-going signal is directed to a link established between the particular MUX board and another MUX board, the latter being connected, directly or indirectly, to a reader via the particular MUX board.

Each MUX board is controlled by control signals allowing the selection of a given antenna, that is to say a given radiation electrode. As illustrated, the control signals are transmitted from a MUX board to its neighbour. For example, the control signals received from control signal up-going links 345-1 are used to control MUX board 320-1 and are transmitted to control signal down-going links 350-1.

According to a particular embodiment, control signal links are bidirectional, as described herein below.

If needed, the MUX board can be powered (as illustrated with dotted lines connecting the MUX boards).

Typically, a MUX board is a PCB (Printed Circuit Board) embedding one or several standard multiplexer devices and associated electronic circuitry. It is designed so as to be easily connectable to the microstrip lines that are connected to the radiation electrodes to which the MUX board has to be connected.

Figure 5 represents schematically a partial top view of the gondola partially shown in Figure 3, illustrating, in particular, the arrangement of the radiation electrodes 310 and the rigid microstrip lines relative to the back panel 300.

For the sake of illustration, the radiation electrodes can be made of aluminium, austenitic stainless steel, brass, copper, or more generally any non-magnetic material that is a good electrical conductor. Each radiation electrode can be a square device of 160 x 160 millimetres and of one millimetre thick.

The radiation electrodes may be spaced apart by 160 to 300 millimetres, for example 266 millimetres. In the given example, the distance between radiation electrodes and the back panel is typically a few millimetres, for example 2 millimetres.

Rigid microstrip lines may also be made of aluminium, austenitic stainless steel, brass, copper, or more generally any non-magnetic material that is a good electrical conductor. Their width may be a few centimetres (or less than one centimetre) while their thickness can be 1 millimetre. Their length is typically in the range of 200 to 450 millimetres. Likewise, the distance between microstrip lines and the back panel is typically a few millimetres, for example 2 millimetres. As illustrated, microstrip lines are only secured by electrical and mechanical connexions with MUX boards and by fastening means that are also used for providing electrical connexions with radiation electrodes. In some cases (for example for long microstrip lines), dielectric spacer can be used to space apart the microstrip line and the back panel by a pre-determined distance. Those spacers can extend partially or totally in the volume formed between the back panel and the microstrip line.

Figure 6, comprising Figures 6a and 6b, illustrates an example of means for connecting a patch antenna and for fastening an associated microstrip line and a radiation electrode, according to the invention.

According to a particular embodiment, two types of fastening means are used for attaching a radiation electrode to a metal sheet used as ground electrode (typically the back panel or a horizontal shelf of a piece of furniture). A first type (reference 600 in Figure 6a) is used for attaching only the radiation electrode to the metal sheet while the other one (reference 605 in Figure 6b) is used for attaching the radiation electrode and a microstrip line to the metal sheet and for establishing an electrical connexion between the radiation electrode and the microstrip line. According to the illustrated example, each radiation electrode is fastened by means of four fastening means of the first type, located in the corners of the radiation electrode, and one fastening means of the second type, horizontally centred on the radiation electrode and vertically located around one or two thirds of the radiation electrode's height. The vertical location is determined so as to keep the distance between two parallel microstrip lines large enough to avoid line coupling while respecting impedance matching (between microstrip line and radiation electrode).

Fastening means of the first type can be rivets, for example snap rivets, or the like. Such fastening means are advantageously made of dielectric material such as nylon. If conductive material is used, dielectric discs should be placed between the rivet and the back panel (or more generally the ground electrode) and/or between the rivet and the radiation electrode to avoid electrical contact between the electrodes. A dielectric spacer is arranged in between the electrodes. It can be made of nylon.

As shown in Figure 6a, a snap rivet 355, for example a nylon snap rivet having a head diameter of approximately 8 millimetres and a body diameter of approximately 3 millimetres, is used for securely attaching radiation electrode 310 to back panel 300. To that end, aligned holes are drilled in the electrodes for receiving the mating parts of the snap rivet.

A dielectric spacer 360 is arranged in between the radiation electrode 310 and the back panel 300 to provide a predetermined distance, for example two millimetres, between them. The spacer can be a simple washer or a washer having a shoulder for improving stability (in such a case, one of the holes made in the electrodes is larger than the diameter of the fastening means). It can be made of nylon.

The fastening means of the second type can be rivets, for example pop rivets, or the like. Such fastening means is made of conductive material, for example of aluminium for establishing an electrical connexion between the radiation electrode and a microstrip line. Dielectric spacers are arranged in between the electrodes, the ground electrode (typically the back panel) and the microstrip line, and the fastening means made of conductive material and the ground electrode. Such spacers can be made of nylon.

As illustrated in Figure 6b, radiation electrode 310 that is connected to microstrip line 330 cooperates with the back panel 300, used as ground electrode, to form a patch antenna. Radiation electrode 310 is electrically connected to microstrip line 330 via a probe feed that takes the form of rivet 365, for example a pop rivet made of aluminium. According to the given example, the head diameter of the rivet 365 is approximately 5 to 8 millimetres while the diameter of its body is approximately 3 to 5 millimetres (the head diameter being greater than the diameter of the body).

Rivet 365 extends across electrodes 300 and 310 and microstrip line 330 through aligned holes. According to the illustrated embodiment, the holes formed in radiation electrode 310 and microstrip line 330 are approximately of the same diameter which is equal to or slightly larger than the diameter of the rivet body while the diameter of the hole drilled in back panel 300 is larger so as to insulate the back panel from the rivet by means of a spacer having a cylindrical shape (which may be part of the spacer used in between the back panel and the radiation electrode or in between the back panel and the microstrip line).

Radiation electrode 310 is maintained at a predetermined distance (e.g. 2 mm) from the back panel 300 thanks to dielectric spacer 370. According to the illustrated embodiment, spacer 370 comprises a shoulder cooperating with the hole drilled in back panel 300 for improving stability. The shoulder of spacer 370 can extend partially or totally in the volume formed between the back panel 300 and radiation electrode (except the holes for snap rivets 355). Spacer 370 extends from the radiation electrode to microstrip line 330 through back panel 300. A dielectric washer (375) surrounding spacer 370 is arranged between back panel 300 and microstrip line 330. The thickness of dielectric washer 375 determines the distance (e.g. 2 mm) between back panel 300 and microstrip line 330.

The spacers 370 and 375 are advantageously sized as a function of a requested characteristic impedance (e.g. 50 ohms) of a transmission line formed by the rigid microstrip line and the fastening means used for attaching the radiation electrode and a microstrip line to the metal sheet and for establishing an electrical connexion between the radiation electrode and the microstrip line.

Rivet 365 is preferably mated on the microstrip line side for aesthetic reasons (the radiation electrodes being located on the front side of the black panel, they are visible when the corresponding piece of furniture is in use contrary to the microstrip lines).

The spacers used in the connexion means of the first and second types advantageously comprise holes receiving connexion means for securing the spacer and guiding the fastening means in associated holes of the ground electrodes.

The connexion means between the radiation electrodes and microstrip lines aim at providing an electrical connexion between the radiation electrodes and microstrip lines, mechanically fastening the radiation electrodes and microstrip lines to the back panels, and providing a predetermined distance, typically two millimetres, between electrodes and between ground electrodes and microstrip lines. In other words, the connexion fulfils both a mechanical function and an electrical function.

The use of rivets as connexion means, in particular aluminium rivets, provides advantages such as reduced sizes, reduced costs, and ease of mounting.

It is noted that although a ground electrode is positioned in between radiation electrodes and microstrip lines in the illustrated examples, radiation electrodes and microstrip lines can be positioned on the same side of a ground electrode. Likewise, although the given examples mainly concern gondola and back panels, the invention applies equally to other parts and types of furniture such as horizontal shelves.

Nevertheless, it is noted that positioning a ground electrode between radiation electrodes and microstrip lines leads to a low electrical coupling (capacitive or inductive coupling) between radiation electrodes and microstrip lines.

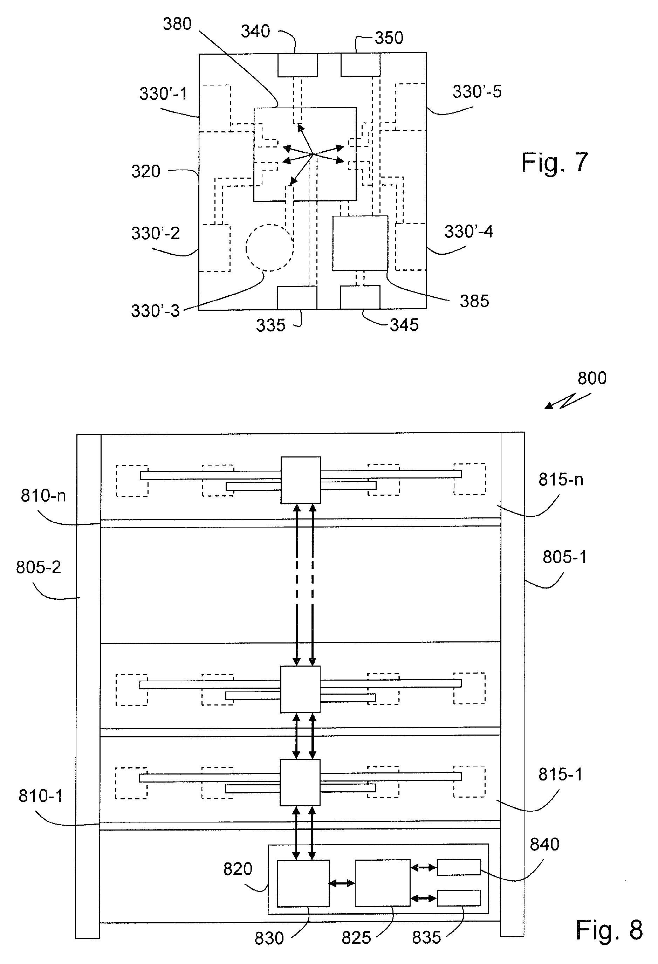

Figure 7 illustrates schematically an example of a MUX board 320 for selecting an antenna in an array of antennas. As shown, MUX board 320 comprises footprints 330'-1 to 330'-5 for connecting microstrip lines or a probe feed (in the case of a radiation electrode positioned in front of the MUX board). The electrical connexion between footprints and microstrip lines or a probe feed can be made mechanically, for example by pressure, by welding, or the like. The MUX board also comprises *RF_up* 335 and *RF_down* 340 for conveying RF signals as well as control signal up-going links 345 and control signal down-going links 350 as described above.

MUX board 320 further comprises a multiplexer (380) for directing *RF_up* 335 to one of the footprints 330'-1 to 330'-5 and *RF_dovvn* 340, as suggested by the six arrows joining a point linked to footprint 335 to points linked to the other footprints and to *RF_down* 340. Multiplexer 380 is controlled by control circuit 385.

As illustrated in the given example, MUX board 320 comprises control circuit 385 that receives control signals from control signal up-going links 345. The received control signals are transmitted to control signal down-going links 350 (after having been modified, if necessary, in control circuit 385).

Advantageously, control signals, for example control signals as modified by control circuit 385 are retransmitted via control signal up-going links 345 that is used, accordingly, to receive and transmit control signals.

Similarly, control signal down-going links 350 can be used to transmit and receive control signals. Therefore, control signals received from control signal down-going links 350 can be retransmitted to control signal up-going links 345.

It is noted that the control signals can be generated in the RFID reader that is used and to which the MUX boards are connected (most of RFID readers comprise an 8 bits I/O port).

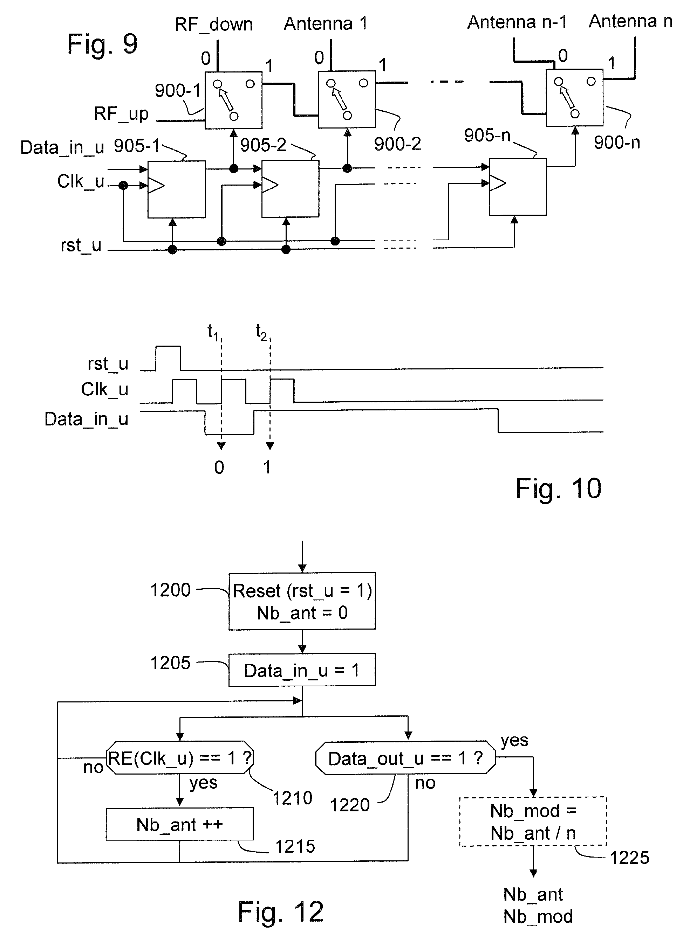

An example of implementation of MUX board 320 is described by reference to Figures 9 to 12.

A MUX board, the corresponding selectable antennas and the associated elements can be configured as pre-cabled modules so as to facilitate the assembly of furniture embedding RFID infrastructure. Indeed, retail furniture is generally made by assembling standardized parts such as vertical upright columns, back panels, cross-braces, arms, horizontal shelves, and so on. Accordingly, back panels and horizontal shelves, in particular, may consist of pre-cabled modules of standardized dimensions, embedding RFID elements, so as to be easily mounted in furniture. Pre-cabled modules comprise at least one conductive plate, typically a metal sheet, uses as ground electrode. Such conductive plate is, for example, a ferromagnetic back panel of standard size such as a metal sheet having standard vertical hitching means of 25 millimetres pitch and a width of 1330, 1250, 1220, 1000, 915, 830, 665, or 500 millimetres.

Several pre-cabled modules such as back panels can be mounted side by side. In such a case, connexions are preferably established between modules so as to increase the size of the site wherein RFID tags may be read without increasing complexity for controlling the reading operations. In other words, modules can be arranged so as to increase the number of radiation electrodes while using a main controller.

According to a particular embodiment, pieces of furniture are considered, from an RFID system point of view, as a stand-alone system. Therefore, each piece of furniture comprises a plurality of antennas, one or more RFID reader(s), and processing means able to interrogate RFID tags located in the vicinity of the antennas and to transmit obtained information.

Figure 8 illustrates schematically a piece of furniture embedding pre-cabled modules.

As shown, pre-cabled modules 815-1 to 815-n are back panels of a piece of furniture (800) of the gondola type that comprises vertical upright columns 805-1 and 805-2 as well as horizontal shelves 810-1 to 810-n.

It is noted that even if pre-cabled modules 815-1 to 815-n are of similar shapes in Figure 8, they can be of different shapes and/or size.

Piece of furniture 800 comprises processing means 820 having mother board 825 which is connected to RFID reader 830, storage means 835 (e.g., hard drive, solid-state drive, flash memory, or the like) and communication interface 840. Mother board 825 is, for example, a standard personal computer (PC) mother board. Communication interface 840 can be, for example, of the Ethernet or of the WiFi type. It allows processing means 820 to receive information from a similar processing system belonging to another piece of furniture and to transmit information to another processing system, in particular to a processing system belonging to another piece of furniture or to a central server.

Each of the pre-cabled modules 815-1 to 815-n comprises one MUX board such as the one described with reference to Figure 7 and an array of antennas, each of which comprising a radiation electrode which is connected to the MUX board by way of a microstrip line or a probe feed as described previously.

RFID reader 830 is connected to the first pre-cabled module 815-1 which is in turn connected to the second pre-cabled module 815-2 and so on so that each pre-cabled module is connected to the neighbouring pre-cabled module.

More precisely, an RF signal link of RFID reader 830 is connected to the RF signal up-going link of the MUX board (*RF_up*) of the first pre-cabled module (815-1), the RF signal down-going link of the MUX board (*RF_down*) of the first pre-cabled module (815-1) is connected to the RF signal up-going link of the MUX board of the second pre-cabled module (815-2), and so on.

Likewise, control signal links of RFID reader 830 are connected to the control signal up-going links of the MUX board of the first pre-cabled module (815-1), the control signal down-going links of the MUX board of the first pre-cabled module (815-1) are connected to the control signal up-going links of the MUX board of the second module (815-2), and so on.

The RF connexions are preferably established by using UHF coaxial cables while control signal (and power) connexions are preferably established by using ribbon cables. Connectors, preferably keyed connectors, can be used to establish such connexions.

According to a particular embodiment, the MUX board of a pre-cabled module comprises the same number of two-state UHF switches as the number of patch antennas that the pre-cabled module comprises. In this embodiment, each two-state UHF switch can be controlled by a latch, for example a D flip-flop. It is reminded here that the input (D) of a D flip-flop is copied to its output (*Q*) on clock (*Clk*) rising edges while a reset signal (*rst*) is used to set its output to the zero logical state.

Such two-state UHF switches and D flip-flops are serially connected as illustrated in Figure 9.

As shown, the input of each two-state UHF switch is connected to the output of a previous two-state UHF switch or to *RF_up* while one of its outputs is connected to an antenna and the other output is connected to another antenna, to the input of a following two-state UHF switch, or to *RF_down.*

For example, the input of the first two-state UHF switch 900-1 is connected to *RF_up* while its outputs are connected to *RF_down* (position "0") and to the input of the second two-state UHF switch 900-2 (position "1") of which the outputs are connected to antenna 1 (position "0") and to the input of the third two-state UHF switch (position "1"), not represented. The input of the *n*^{th} (and last) two-state UHF switch 900-n is connected to an output of the (*n-1*)^{th} two-state UHF switch (not represented) while its outputs are connected to antenna n-1 and antenna n (positions "0" and "1", respectively).

The first two-state UHF switch 900-1 is controlled by the output of the first D flip-flop 905-1. Likewise, the second two-state UHF switch 900-2 is controlled by the output of the second D flip-flop 905-2 and the *n*^{th} two-state UHF switch 900-n is controlled by the output of the n^{th} D flip-flop 905-n.

The input of the first D flip-flop 905-1 is connected to a control signal up-going link referred to *Data_in_u* while its output is connected to the input of the second D flip-flop 905-2. In turn, the output of the second D flip-flop 905-2 is connected to the input of the third D flip-flop (not represented) and so on.

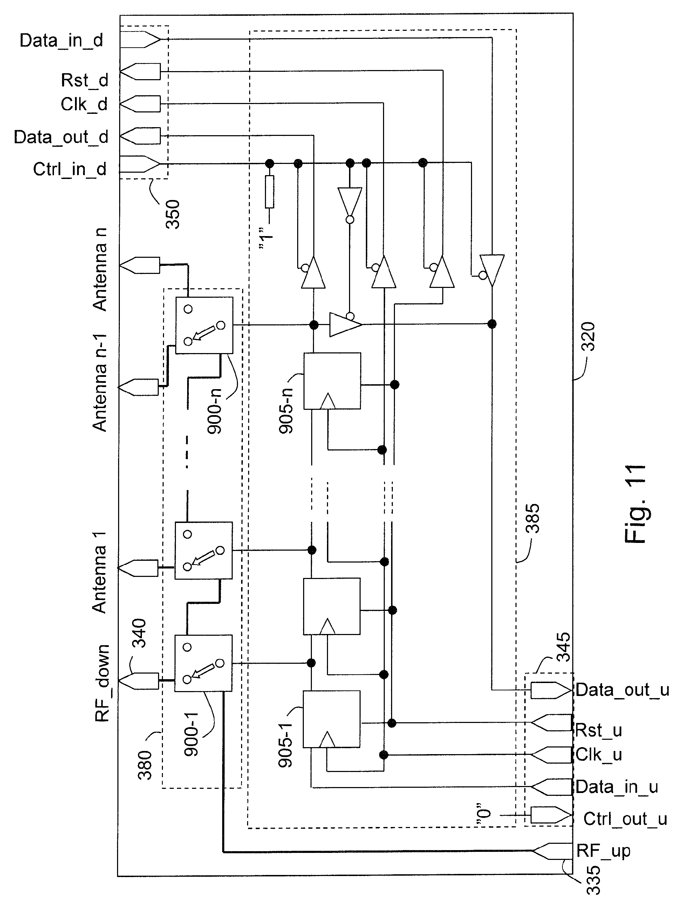

As described with reference to Figure 11, the output of the *n*^{th} D flip-flop 905-n is advantageously connected to a control signal down-going link referred to as *Data_out_u* enabling dynamic management of the antennas.

As illustrated in Figure 9, all D flip-flops 905-1 to 905-n, constituting a shift register, share a common clock signal (*Clk_u*) and a common reset signal (*rst_u*).

According to the arrangement of Figure 9, selecting a specific antenna consists in writing a particular configuration parameter in the shift register constituted by the D flip-flops of the MUX board.

For the sake of illustration, selecting the first antenna (antenna 1) using the MUX board illustrated in Figure 9 consists in setting two-state UHF switch 900-1 to position "1" (for selecting its output connected to the input of flip-flop 900-2) and two-state UHF switch 900-2 to position "0" (for selecting the output connected to antenna 1). To that end, the logical value "10" is written in the shift register constituted by the D flip-flops 905-1 to 905-n as illustrated in Figure 10.

After having reset D flip-flops 905-1 to 905-n thanks to reset signal *rst_u,* the output of each D flip-flop is set to zero. Next, the clock signal *Clk_u* is activated for copying the input of each D flip-flop 900-1 to 900-n to its output at each rising edge. Accordingly, the logical value "0" of control signal *Data_in_u* (connected to the input of D flip-flop 900-1) is copied to the output of D flip-flop 900-1 at time t₁. Then, at time t₂, the logical value "0" of the output of D flip-flop 900-1, that is to say of the input of D flip-flop 900-2, is copied to the output of D flip-flop 900-2 and the logical value "1" of control signal *Data_in_u* is copied to the output of D flip-flop 900-1. The clock signal *Clk_u* is then frozen so that D flip-flops 900-1 to 900-n do not change state. Consequently, the first antenna is selected and can be used for emitting and receiving signals.

Several MUX boards comprising the two-state UHF switches and the D flip-flops illustrated in Figure 9 can be connected together to increase the number of antennas that can be used as described with reference to Figure 8. In such a case, the configuration parameter that should be written in the shift register constituted by the D flip-flops of all the MUX boards used, corresponds to the concatenation of the configuration sub-parameters associated with each MUX board.

For example, if four pre-cabled modules are used, each comprising four antennas connected to a MUX board similar to the one schematically illustrated in Figure 9, and if the third antenna of the third module is to be selected, then the configuration parameter that should be written in the shift register is "0xxx0xxx1110xxxx" where x represents any value (i.e. logical value "0" or "1"). "0xxx0xxx1110xxxx" represents the concatenation of the configuration sub-parameters "0xxx", "0xxx", "1110", and "xxxx" associated to the first, second, third and fourth modules, respectively.

The configuration sub-parameter "0xxx" associated to the first and second modules means that the first two-state UHF switches of these modules are set to position "0" (for selecting the switch output connected to *RF_down,* that is to say to *RF_up* of the second and third modules, respectively), the position of the other two-state UHF switches of the first and second modules having no use.

Similarly, the configuration sub-parameter "1110" associated with the third module means that the first, second, and third two-state UHF switches of this module are set to position "1" (for selecting the switch output connected to the input of the second, third, and fourth two-state UHF switches, respectively) and that the fourth two-state UHF switch of the module is set to position "0" (for selecting the switch output connected to the corresponding antenna.

The configuration parameter "0xxx0xxx1110xxxx" is written in the shift register serially, bit by bit, starting from the least significant bit (the rightmost bit) to the most significant bit (the left-most bit) that is to say from "x" to "0".

It is noted that since the first 5 least significant bits (which are equal to "xxxxx") are of no use, the configuration parameter "0xxx0xxx1110xxxx" can be simplified to "0xxx0xxx1110" (reducing the number of clock cycles required to write the configuration parameter in the shift register).

Table 1 given in the Appendix illustrates all the configuration parameters for selecting an antenna in a system comprising four pre-cabled modules, each pre-cabled module having four antennas, where the MUX boards of these pre-cabled modules are similar to the one shown in Figure 9. According to this example, *Bᵢ* designates the *i*^{th} bit of the configuration parameter while *A.j, M.k* designates the selection of the *j*^{th} antenna of the *k*^{th} pre-cabled module.

In this embodiment which is particularly simple to implement and which requires few control signals, the length of the configuration parameter is set as a function of the number of antennas connected to a single RFID reader.

As mentioned above, such an embodiment enables dynamic management of the pre-cabled modules and antennas that are used. Indeed, after having initialized the shift register and set the logical value "1" at its input, the number of D flip-flops (corresponding here to the number of selectable antennas) is determined by the number of clock rising edges counted until the logical value "1" reaches the output of the last D flip-flop.

To that end, a simple logic is advantageously implemented in each MUX board so as to transmit to a reader the output value of the last D flip-flop if no MUX board is connected to the down-going links of the current MUX board or a value received from another MUX board if a MUX board is connected to the down-going links of the current MUX board. Such a simple logic is illustrated in Figure 11 which represents an example of an implementation of a MUX board based on the arrangement of Figure 9.

As illustrated, the MUX board 320 comprises a multiplexer 380 having a plurality of two-state UHF switches and a control circuit 385 having a plurality of D flip-flops, an inverter (NOT gate) and three-state buffers (whose input is copied to the output if the control command is "0" and whose output is set to a high impedance if the control command is "1").

The control signal up-going links 345 of MUX board 320 comprise a link for carrying a *Ctrl_out_u* signal which is set to the logical value "0", a link for carrying a *Data_in_u* signal which is used to write a configuration parameter in the shift register constituted by the D flip-flops, a link for carrying a *Clk_u* clock signal, a link for carrying a *rst_u* reset signal, and a link for carrying a *Data_out_u* signal for transferring the output value of the last D flip-flop or a value received from another MUX board.

Similarly, the control signal down-going links 350 of the MUX board 320 comprise a link for carrying a *Ctrl_in_d* signal, a link for carrying a *Data_out_d* signal, a link for carrying a *Clk_d* signal, a link for carrying a *rst_d* signal, and a link for carrying a *Data_in_d* signal.

The control signal up-going links 345 are to be connected to an RFID reader or to a MUX board connected (directly or indirectly) to an RFID reader while the control signal down-going links 350 are to be connected to a MUX board which is connected to an RFID reader via MUX board 320 (that is to say a MUX board connected directly or indirectly to the down-going links of MUX board 320).

When MUX board 320 is connected to another MUX board 320' that is to be connected to an RFID reader via MUX board 320, the links carrying *Ctrl_in_d, Data_out_d, Clk_d, rst_d,* and *Data_in_d* signals of MUX board 320 are connected to the links carrying *Ctrl_out_u', Data_in_u', Clk_u', rst_u',* and *Data_out_u'* signals of MUX board 320', respectively.

As illustrated, the links carrying *Clk_d* and *rst_d* signals are connected to the links carrying *Clk_u* and *rst_u* signals, respectively, via three-state buffers controlled by *Ctrl_in_d* signal. Accordingly, the links carrying *Clk_d* and *rst_d* signals are connected to the links carrying *Clk_u* and *rst_u* signals, respectively, only if MUX board 320 is connected to another MUX board that is to be connected to an RFID reader via MUX board 320 (that is to say a MUX board connected directly or indirectly to the down-going links of MUX board 320).

Similarly, *Ctrl_in_d* signal controls two three-state buffers whose inputs are connected to the output of the last D flip-flop and to the link carrying *Data_in_d* signal, respectively, so that *Data_out_u* signal corresponds to the output of the last D flip-flop if MUX board 320 is not connected to another MUX board that is to be connected to an RFID reader via MUX board 320 and to *Data_in_d* signal otherwise.

Likewise, the output of the last D flip-flop is connected to the link carrying *Data_out_d* signal via a three-state buffer controlled by *Ctrl_in_d* so that the output of the last D flip-flop is connected to the link carrying *Data_out_d* only if MUX board 320 is connected to another MUX board that is to be connected to an RFID reader via MUX board 320.

In order to simplify the installation of shelves embedding the invention, the configuration of the system, in particular for determining the number of antennas connected to an RFID reader, can be carried out dynamically.

Figure 12 illustrates an example of an algorithm for determining the number of antennas that can be individually selected from a set of pre-cabled modules comprising MUX boards such as the one described with reference to Figure 11.

As shown, a first step (step 1200) consists in resetting all the D flip-flops (of all the MUX boards) used for controlling the two-state UHF switches by setting the reset signal to logical value "1" and by initializing the *NB_ant* value, representing the number of antennas, to zero.

Next, the *Data*_*in*_*u* signal that is applied to the first D flip-flop of the first pre-cabled module connected to the apparatus carrying out the steps of the algorithm shown in Figure 12 (typically an RFID reader) is set to one (step 1205). The clock signal *Clk_u* is activated (if it was not).

A test is then performed to detect the rising edges of the clock signal (step 1210). If a rising edge of the clock signal is detected, the *NB_ant* value is increased by one (step 1215).

In parallel, another test is performed to determine whether or not the *Data_out_u* signal is equal to the logical value "1" (step 1220). If the *Data_out_u* signal is equal to the logical value "1", the process is stopped, the number of antennas (or at least of D flip-flops that can be used to select antennas) being equal to the value of *Nb_ant.* Optionally, if the number of antennas per pre-cabled module is known and is the same for all the pre-cabled modules, the number *Nb*_*mod* of pre-cabled modules can be determined by dividing the value of *Nb*_*ant* by the number n of antennas in each pre-cabled module (step 1225).

It is noted that such an algorithm can be executed periodically to check the configuration of the system, allowing pre-cabled modules to be added and/or removed dynamically.

Accordingly, pieces of furniture comprising pre-cabled modules embedding RFID infrastructure may be easily assembled or modified without perturbing their processing means.

Returning to Figure 8, the information regarding the piece of furniture such as the number of pre-cabled modules and the number of antennas (i.e. the number of radiation electrodes) can be stored in storage means 835 for later use.

When the processing means 820 have to interrogate RFID tags located in the vicinity of a radiation electrode (that is to say an antenna), the latter is identified according to an index with which it is associated. Next, the MUX boards are configured by writing a configuration parameter based on such an index, as described above, to connect the selected radiation electrode to the RFID reader so that the latter can interrogate the RFID tags on a standard basis. The read data is preferably stored within storage means 835 before being transmitted to other processing means such as a central server executing an ERP (Enterprise Resource Planning) or similar applications.

Naturally, in order to satisfy local and specific requirements, a person skilled in the art may apply to the solution described above many modifications and alterations all of which, however, are included within the scope of protection of the invention as defined by the following claims.

### APPENDIX

**Table 1**

| **B₁₅** | **B₁₄** | **B₁₃** | **B₁₂** | **B₁₁** | **B₁₀** | **B₉** | **B₈** | **B₇** | **B₆** | **B₅** | **B₄** | **B₃** | **B₂** | **B₁** | **B₀** | **Selection** |
|---|---|---|---|---|---|---|---|---|---|---|---|---|---|---|---|---|
| 1 | 0 | x | x | x | x | x | x | x | x | x | x | x | x | x | x | **A.1, M.1** |
| 1 | 1 | 0 | x | x | x | x | x | x | x | x | x | x | x | x | x | **A.2, M.1** |
| 1 | 1 | 1 | 0 | x | x | x | x | x | x | x | x | x | x | x | x | **A.3, M.1** |
| 1 | 1 | 1 | 1 | x | x | x | x | x | x | x | x | x | x | x | x | **A.4, M.1** |
| 0 | x | x | x | 1 | 0 | x | x | x | x | x | x | x | x | x | x | **A.1, M.2** |
| 0 | x | x | x | 1 | 1 | 0 | x | x | x | x | x | x | x | x | x | **A.2, M.2** |
| 0 | x | x | x | 1 | 1 | 1 | 0 | x | x | x | x | x | x | x | x | **A.3, M.2** |
| 0 | x | x | x | 1 | 1 | 1 | 1 | x | x | x | x | x | x | x | x | **A.4, M.2** |
| 0 | x | x | x | 0 | x | x | x | 1 | 0 | x | x | x | x | x | x | **A.1, M.3** |
| 0 | x | x | x | 0 | x | x | x | 1 | 1 | 0 | x | x | x | x | x | **A.2, M.3** |
| 0 | x | x | x | 0 | x | x | x | 1 | 1 | 1 | 0 | x | x | x | x | **A.3, M.3** |
| 0 | x | x | x | 0 | x | x | x | 1 | 1 | 1 | 1 | x | x | x | x | **A.4, M.3** |
| 0 | x | x | x | 0 | x | x | x | 0 | x | x | x | 1 | 0 | x | x | **A.1, M.4** |
| 0 | x | x | x | 0 | x | x | x | 0 | x | x | x | 1 | 1 | 0 | x | **A.2, M.4** |
| 0 | x | x | x | 0 | x | x | x | 0 | x | x | x | 1 | 1 | 1 | 0 | **A.3, M.4** |
| 0 | x | x | x | 0 | x | x | x | 0 | x | x | x | 1 | 1 | 1 | 1 | **A.4, M.4** |

## Claims

1. A pre-cabled module adapted to furniture, the pre-cabled module comprising a plurality of patch antennas and at least one multiplexer board (320-1),
the pre-cabled module further comprising at least one conductive plate (300), each of the plurality of patch antennas comprising a radiation electrode (310), a rigid microstrip line (330) and a ground electrode;
the ground electrode of each of the patch antenna being the at least one conductive plate,
**characterized in that**
each of the radiation electrode, the ground electrode, and the microstrip line of each patch antenna forms a layered conductive plate;
each patch antenna further comprises fastening and insulating means (365, 370, 375) for securing the three layered plates and for electrically connecting the radiation electrode to the rigid microstrip line;
the ground electrode is insulated from the radiation electrode and the rigid microstrip line;
the rigid microstrip line of each of the patch antennas is electrically connected to the multiplexer board; and
the at least one conductive plate is made of metal sheet belonging to a piece of furniture.

2. The pre-cabled module of claim 1 wherein the at least one conductive plate is located between the radiation layer and the rigid microstrip line of each of the patch antennas.

3. The pre-cabled module of any one of the preceding claims wherein the radiation electrode and/or the rigid microstrip line of at least one of the patch antennas is/are made of electrically conductive non-magnetic material.

4. The pre-cabled module of any one of the preceding claims wherein the multiplexer board comprises a multiplexer device (380) allowing the selection of at most one of the radiation electrodes of the patch antennas so as to connect at most one of the radiation electrodes of the patch antennas to a signal connector (335-1).

5. The pre-cabled module of claim 4 wherein the multiplexer device is configured for allowing the selection of at most one of the radiation electrodes of the patch antennas or of a second signal connector (340), the signal connector being called first signal connector, so as to connect at most one of the radiation electrodes of the patch antennas or the second signal connector to the first signal connector.

6. The pre-cabled module according to claim 4 or claim 5 wherein the multiplexer board further comprises first and second control signal connectors, the first and second control signal connectors being connected to each other and to the multiplexer device to enable the multiplexer device to be controlled by a control signal received from the first control signal connector.

7. The pre-cabled module according to claim 6 wherein the multiplexer board further comprises a control circuit (385) that is operational for controlling the multiplexer device in response to the control signal.

8. The pre-cabled module according to claim 7 wherein the control circuit comprises means for transmitting an item of information relating to the number of patch antennas selectable by the multiplexer device.

9. The pre-cabled module of any one of the previous claims, the size of the pre-cabled module being substantially the same size as an equivalent standard module for furniture.

10. A piece of furniture (800) comprising at least one pre-cabled module (815-1, 815-n) according to any one of the preceding claims.

11. The piece of furniture of claim 10 comprising a plurality of pre-cabled modules according to any one of claims 1 to 9, the piece of furniture further comprising a reader (830), the reader comprising means for accessing data of an electronic tag located in the vicinity of the radiation electrode of one of the patch antennas, the reader being connected to a single pre-cabled module amongst the plurality of pre-cabled modules.

12. The piece of furniture of claim 11 further comprising processing means (825, 840) connected to the reader, the processing means comprising communication means for transmitting data of an electronic tag located in the vicinity of the radiation electrode of one of the patch antennas to an external apparatus.

13. The piece of furniture of claim 11 or claim 12 further comprising storage means (835) for storing data of an electronic tag located in the vicinity of the radiation electrode of one of the patch antennas.

## Patentansprüche

1. Vorverkabeltes Modul, das für Möbel ausgebildet ist, wobei das vorverkabelte Modul eine Mehrzahl von Patch-Antennen und mindestens eine Multiplexer-Platine (320-1) aufweist,
wobei das vorverkabelte Modul ferner mindestens eine Leiterplatte (300) aufweist, wobei jede der Mehrzahl von Patch-Antennen eine Strahlungselektrode (310), eine starre Mikrostreifenleitung (330) und eine Masseelektrode aufweist;
wobei die Masseelektrode jeder der Patch-Antennen die mindestens eine Leiterplatte darstellt,
**dadurch gekennzeichnet, dass**
jede der Strahlungselektrode, der Masseelektrode und der Mikrostreifenleitung jeder Patch-Antenne eine geschichtete Leiterplatte bildet;
jede Patch-Antenne ferner Befestigungs- und Isoliereinrichtungen (365, 370, 375) zum Befestigen der drei geschichteten Platten und zum elektrischen Verbinden der Strahlungselektrode mit der starren Mikrostreifenleitung aufweist;
wobei die Masse-Elektrode von der Strahlungselektrode und der starren Mikrostreifenleitung isoliert ist;
wobei die starre Mikrostreifenleitung jeder der Patch-Antennen elektrisch mit der Multiplexer-Platine verbunden ist; und
die mindestens eine Leiterplatte aus Blech gebildet ist, das zu einem Möbelstück gehört.

2. Vorverkabeltes Modul nach Anspruch 1, wobei die mindestens eine Leiterplatte sich zwischen der Strahlungsschicht und der starren Mikrostreifenleitung jeder der Patch-Antennen befindet.

3. Vorverkabeltes Modul nach einem der vorhergehenden Ansprüche, wobei die Strahlungselektrode und/oder die starre Mikrostreifenleitung mindestens einer der Patch-Antennen aus einem elektrisch leitenden nicht-magnetischen Material gebildet ist/sind.

4. Vorverkabeltes Modul nach einem der vorhergehenden Ansprüche, wobei die Multiplexer-Platine eine Multiplexer-Vorrichtung (380) aufweist, die die Auswahl höchstens einer der Strahlungselektroden der Patch-Antennen zulässt, um höchstens eine der Strahlungselektroden der Patch-Antennen mit einem Signalverbindungselement (335-1) zu verbinden.

5. Vorverkabeltes Modul nach Anspruch 4, wobei die Multiplexer-Vorrichtung dafür ausgebildet ist, die Auswahl höchstens einer der Strahlungselektroden der Patch-Antennen oder eines zweiten Signalverbindungselements (340) zuzulassen, wobei das Signalverbindungselement als erstes Signalverbindungselement bezeichnet wird, um höchstens eine der Strahlungselektroden der Patch-Antennen oder das zweite Signalverbindungselement mit dem ersten Signalverbindungselement zu verbinden.

6. Vorverkabeltes Modul nach Anspruch 4 oder Anspruch 5, wobei die Multiplexer-Platine ferner ein erstes und ein zweites Steuersignalverbindungselement aufweist, wobei das erste und das zweite Steuersignalverbindungselement miteinander und mit der Multiplexer-Vorrichtung verbunden sind, um zu ermöglichen, dass die Multiplexer-Vorrichtung von einem von dem ersten Steuersignalverbindungselement empfangenen Steuersignal gesteuert wird.

7. Vorverkabeltes Modul nach Anspruch 6, wobei die Multiplexer-Platine ferner eine Steuerschaltung (385) aufweist, die dazu eingesetzt werden kann, die Multiplexer-Vorrichtung als Reaktion auf das Steuersignal zu steuern.

8. Vorverkabeltes Modul nach Anspruch 7, wobei die Steuerschaltung eine Einrichtung zum Übertragen einer Information aufweist, die sich auf die Anzahl von Patch-Antennen bezieht, die von der Multiplexer-Vorrichtung ausgewählt werden können.

9. Vorverkabeltes Modul nach einem der vorhergehenden Ansprüche, wobei die Größe des vorverkabelte Moduls im Wesentlichen die gleiche Größe ist wie die eines äquivalenten Standardmoduls für Möbel.

10. Möbelstück (800), das mindestens ein vorverkabeltes Modul (815-1, 815-n) nach einem der vorhergehenden Ansprüche aufweist.

11. Möbelstück nach Anspruch 10, das eine Mehrzahl von vorverkabelten Modulen nach einem der Ansprüche 1 - 9 aufweist, wobei das Möbelstück ferner eine Leseeinrichtung (830) aufweist, wobei die Leseeinrichtung eine Einrichtung zum Zugreifen auf Daten einer elektronischen Kennzeichnung aufweist, die sich in der Nähe der Strahlungselektrode einer der Patch-Antennen befindet, wobei die Leseeinrichtung mit einem einzelnen vorverkabelten Modul aus der Mehrzahl von vorverkabelten Modulen verbunden ist.

12. Möbelstück nach Anspruch 11, ferner mit einer mit der Leseeinrichtung verbundenen Verarbeitungseinrichtung (825, 840), wobei die Verarbeitungseinrichtung eine Kommunikationseinrichtung aufweist, zum Übertragen von Daten einer elektronischen Kennzeichnung, die sich in der Nähe der Strahlungselektrode einer der Patch-Antennen befindet, an ein externes Gerät.

13. Möbelstück nach Anspruch 11 oder Anspruch 12, ferner mit einer Speichereinrichtung (835) zum Speichern von Daten einer elektronischen Kennzeichnung, die sich in der Nähe der Strahlungselektrode einer der Patch-Antennen befindet.

## Revendications

1. Module précâblé adapté aux meubles, le module précâblé comprenant plusieurs antennes patch et au moins une carte multiplexeur (320-1),
le module précâblé comprenant en outre au moins une plaque conductrice (300), chacune de la pluralité d'antennes patch comprenant une électrode de radiation (310), une ligne microruban rigide (330) et une électrode de masse ;
l'électrode de masse de chacune des antennes patch étant l'au moins une plaque conductrice,
**caractérisé en ce que** :
chacune parmi l'électrode de radiation, l'électrode de masse et la ligne microruban de chaque antenne patch forme une plaque conductrice en couche ;
chaque antenne patch comprend en outre des moyens de fixation et d'isolation (365, 370, 375) pour maintenir les trois plaques en couche et pour connecter électriquement l'électrode de radiation à la ligne microruban rigide ;
l'électrode de masse est isolée de l'électrode de radiation et de la ligne de microbande rigide ;
la ligne microruban rigide de chacune des antennes patch est connectée électriquement à la carte multiplexeur ; et
l'au moins une plaque conductrice est composée d'une feuille de métal appartenant à un meuble.

2. Module précâblé selon la revendication 1, dans lequel l'au moins une plaque conductrice est située entre la couche de radiation et la ligne microruban rigide de chacune des antennes patch.

3. Module précâblé selon l'une quelconque des revendications précédentes, dans lequel l'électrode de radiation et/ou la ligne microruban rigide d'au moins l'une des antennes patch est/sont composée(s) d'un matériau non magnétique électriquement conducteur.

4. Module précâblé selon l'une quelconque des revendications précédentes, dans lequel la carte multiplexeur comprend un dispositif multiplexeur (380) permettant de sélectionner au plus l'une des électrodes de radiation des antennes patch afin de connecter au plus l'une des électrodes de radiation des antennes patch à un connecteur de signal (335-1).

5. Module précâblé selon la revendication 4, dans lequel le dispositif multiplexeur est configuré pour permettre la sélection d'au plus une des électrodes de radiation des antennes patch ou d'un second connecteur de signal (340), le connecteur de signal étant appelé premier connecteur de signal, afin de connecter au plus une des électrodes de radiation des antennes patch ou le second connecteur de signal au premier connecteur de signal.

6. Module précâblé selon la revendication 4 ou la revendication 5, dans lequel la carte multiplexeur comprend en outre des premier et second connecteurs de signal de commande, les premier et second connecteurs de signal de commande étant reliés l'un à l'autre et au dispositif multiplexeur afin de permettre au dispositif multiplexeur d'être commandé par un signal de commande reçu par le premier connecteur de signal de commande.

7. Module précâblé selon la revendication 6, dans lequel la carte multiplexeur comprend en outre un circuit de commande (385) opérationnel pour commander le dispositif multiplexeur en réponse au signal de commande.

8. Module précâblé selon la revendication 7, dans lequel le circuit de commande comprend des moyens pour transmettre une information relative au nombre d'antennes patch sélectionnables par le dispositif multiplexeur.

9. Module précâblé selon l'une quelconque des revendications précédentes, la taille du module pré-câblé étant essentiellement la même que celle d'un module standard équivalent pour des meubles.

10. Meuble (800) comprenant au moins un module précâblé (815-1, 815-n) selon l'une quelconque des revendications précédentes.

11. Meuble selon la revendication 10 comprenant une pluralité de modules précâblés selon l'une quelconque des revendications 1 à 9, le meuble comprenant en outre un lecteur (830), le lecteur comprenant des moyens pour accéder aux données d'une étiquette électronique située à proximité de l'électrode de radiation de l'une des antennes patch, le lecteur étant connecté à un module précâblé unique de la pluralité de modules précâblés.

12. Meuble selon la revendication 11 comprenant en outre des moyens de traitement (825, 840) connectés au lecteur, les moyens de traitement comprenant des moyens de communication pour transmettre des données d'une étiquette électronique située à proximité de l'électrode de radiation de l'une des antennes patch à un appareil externe.

13. Meuble selon la revendication 11 ou la revendication 12 comprenant en outre un moyen de stockage (835) pour stocker des données d'une étiquette électronique située à proximité de l'électrode de radiation de l'une des antennes patch.
